(19) Europäisches Patentamt
European Patent Office
Office européen des brevets

(11) Veröffentlichungsnummer: **0 060 432**
**B1**

(12) # EUROPÄISCHE PATENTSCHRIFT

(45) Veröffentlichungstag der Patentschrift: **21.05.86**

(51) Int. Cl.⁴: **C 08 L 77/00**, C 08 K 5/34

(21) Anmeldenummer: **82101561.7**

(22) Anmeldetag: **01.03.82**

(54) **Flammfeste Polyamidformmassen.**

(30) Priorität: **12.03.81 DE 3109479**

(43) Veröffentlichungstag der Anmeldung: **22.09.82 Patentblatt 82/38**

(45) Bekanntmachung des Hinweises auf die Patenterteilung: **21.05.86 Patentblatt 86/21**

(84) Benannte Vertragsstaaten: **DE FR GB IT**

(56) Entgegenhaltungen:
**GB-A-2 010 875**

**CHEMICAL ABSTRACTS, Band 84, Nr. 8, 23. Februar 1976, Seite 88, Nr. 45860f, Columbus, Ohio, USA D.J. DONALDSON et al.: "Flame-and wrinkle-resistant finish for apparel goods"**

(73) Patentinhaber: **BAYER AG, Konzernverwaltung RP Patentabteilung, D-5090 Leverkusen 1 Bayerwerk (DE)**

(72) Erfinder: **Rottmaier, Ludwig, Bergstrasse 85, D-5068 Odenthal (DE)**
Erfinder: **Merten, Rudolf, Dr., Berta-von-Suttner-Strasse 55, D-5090 Leverkusen 1 (DE)**
Erfinder: **Tima, Milan Josef, Dr., Roggendorfstrasse 57, D-5000 Koeln 80 (DE)**
Erfinder: **Michael, Dietrich, Dr., Deswatinesstrasse 57, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 060 432 B1

LIBER, STOCKHOLM 1986

**Beschreibung**

Es wurden bereits verschiedene Verfahren vorgeschlagen, um thermoplastische Kunststoffe flammwidrig und feuerhemmend auszurüsten. Das am häufigsten angewandte Verfahren besteht in der Zumischung eines flammwidrigmachenden und feuerhem enden Mittels zum Harz. Zu den bekannten feuerhem enden Mitteln gehören roter Phosphor oder halogenhaltige oder stickstoffhaltige Verbindungen.

Als wirksame Brandschutzmittel für Polyamidformmassen werden heute im technischen Maßstab pulverisierter roter Phosphor oder Halogenverbindungen zusammen mit synergistisch wirkenden Metallverbindungen eingesetzt. Diese Brandschutzmittel und ihre Verwendung sind beispielsweise in der US-PS 3 418 267, in der DAS 1 694 494, der DOS 2 544 219 und der DAS 1 931 387 beschrieben.

Halogenverbindungen haben den Nachteil, daß sie die Kriechstromfestigkeit der PA-Formmassen senken und im Brandfalle Halogenwasserstoff abspalten, der in der Umgebungdes Brandherdes erhebliche Korrosionen verursachen kann. Halogenverbindungen enthaltende Formmassen können in geringem Maße auch bereits bei den erforderlichen hohen Temperaturen in den Verarbeitungsmaschinen Halogenwasserstoff abspalten, der die Maschine schädigen kann. Außerdem sind die synergistisch wirkenden Metallverbindungen wie z.B. Antimontrioxid toxikologisch nicht unbedenklich.

Der pulverförmige rote Phosphor läßt sich üblicherweise nur schwierig handhaben, da er in Gegenwart von Luft bei Kontakt mit heißen Metallflächen zu Staubexplosionen neigt.

Nachteilig ist weiterhin die leichte Entwicklung von giftigen Phosphor-Wasserstoff-Verbindungen, die bei den hohen Verarbeitungstemperaturen der Formmassen durch Reaktion des Phosphors mit Polyamiden stattfinden kann. Zahlreiche zusätzliche Verfahrensschritte sind - wie beispielsweise in den DAS 2 308 104, 2 625 673 und 2 625 691 beschrieben - empfohlen worden, um diese Entwicklung möglichst einzudämmen.

Schließlich erschwert die rote Eigenfarbe des Phosphors die Einstellung heller Farbtöne bei den Formmassen. Die zur Überdeckung der roten Farbe notwendige große Menge an Weißpigmenten führt zur Verschlechterung der mechanischen Eigenschaften.

Zur Flammfestausrüstung von Polyamidharzmassen wurde ferner der Zusatz von Melamin vorgeschlagen (DAS 1 694 254), sowie der Zusatz von Cyanursäure (US-PS 3 980 618) sowie der Zusatz sowohl von Melamin als auch von Cyanursäure (US-PS 4 001 177).

Im Falle des Zusatzes von Melamin erzielt man eine befriedigende Flammfestausrüstung. Das Melamin kann aber unter den Formbedingungen sublimieren und sich auf der Form abscheiden. Diese Erscheinung wird als "Ausplattung" bezeichnet. Hierbei kommt es zu unerwünschten Ablösen oder zu einer Verfleckung des Formkörpers.

Daher ist manchmal das Aussehen der Produkte nicht zufriedenstellend.

Im Falle der Zugabe von Cyanursäure werden die mechanischen Eigenschaften des Formkörpers schon bei geringen Mengen an Flammschutzmittel beeinträchtigt und erhebliche Ausblüherscheinungen beobachtet. Im Falle der Zugabe von Cyanursäure und Melamin ist es erforderlich, mindestens 10 Gew.-Teile auf 100 Gew.-Teile Polyamidharz einzusetzen, um eine befriedigende Flammfestausrüstung zu erzielen. Die "Ausplattung" und das "Ausblühen" sind dabei ebenfalls nicht gering.

Mit Hilfe des erfindungsgemäßen Flammschutzmittels gelingt es, eine Polyamidharzmasse zu schaffen, die zufriedenstellende Flammfestigkeit zeigt und sich insbesondere zur Herstellung von Formkörpern mit hellen Farben eignet, da alle Komponenten fast farblos bzw. weiß sind.

Gegenstand der vorliegenden Erfindung sind daher selbstverlöschende, thermoplastische Polyamidformmassen, die gegebenenfalls bis zu 60 Gew.-%, bezogen auf die Gesamtformmassen, Verstärkungs- und/oder Zusatzstoffe, gegebenenfalls Flammschutzmittel und gegebenenfalls bis zu 50 Gew.-% weitere thermoplastische Harze enthalten und dadurch gekennzeichnet sind, daß sie 0,1 - 20 Gew.-%, bezogen auf die Gesamtformmassen, Glykolurile und/oder Glykolurilsalze der allgemeinen Formel II

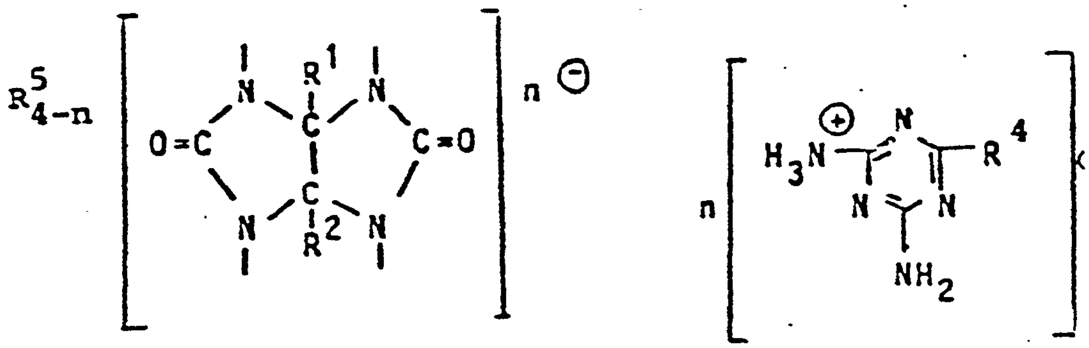

(II)

worin

$R^1$ und $R^2$ die nachfolgend angegebene Bedeutung haben, $R^4$ für Wasserstoff, eine Aminogruppe, einen gegebenenfalls mit Halogen (Chlor, Brom) substituierten aliphatischen, bevorzugt $C_1$-$C_{20}$, besonders bevorzugt $C_1$-$C_6$, cycloaliphatischen, bevorzugt $C_4$-$C_{17}$, besonders bevorzugt $C_5$-$C_6$, araliphatischen, bevorzugt $C_7$-$C_{17}$, besonders bevorzugt $C_7$-$C_{10}$ oder aromatischen, bevorzugt $C_6$-$C_{15}$, besonders bevorzugt $C_6$-$C_{10}$-Rest, $R^5$ für Wasserstoff, einen aliphatischen, bevorzugt $C_1$-$C_{20}$, besonders bevorzugt $C_1$-$C_6$, cycloaliphatischen, bevorzugt $C_4$-$C_{15}$, besonders bevorzugt $C_5$-$C_6$, araliphatischen, bevorzugt $C_7$-$C_{15}$, besonders bevorzugt $C_7$-$C_{10}$ oder aromatischen, bevorzugt $C_6$-$C_{15}$, besonders bevorzugt $C_6$-$C_{10}$-Rest und n für eine ganze Zahl von 1 bis 4, vorzugsweise 2 bis 4 stehen, als Flammeschutzmittel entahlten. Besonders bevorzugt steht $R^1$ und $R^2$ für Wasserstoff oder einen Methylrest und $R^5$ für Wasserstoff.

Als Flammschutzmittel werden auch Glykolurile der allgemeinen Formel I

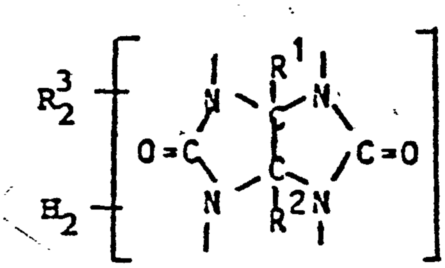

(I)

worin $R^1$ und $R^2$ gleich oder verschieden, unabhängig voneinander für Wasserstoff, einen aliphatischen, vorzugsweise $C_1$-$C_{20}$, oder einen aromatischen, vorzugsweise $C_6$-$C_{10}$-Rest und $R^3$ für Wasserstoff, einen aliphatischen, vorzugsweise $C_4$-$C_{15}$, einen araliphatischen, vorzugsweise $C_7$-$C_{15}$ oder einen aromatischen, vorzugsweise $C_6$-$C_{15}$-Rest stehen, verwendet.

Die Reste $R^1$, $R^2$ und $R^3$ in den Glykolurilen der allgemeinen Formel I können gegebenenfalls ganz oder teilweise mit Halogen (Cl, Br), Alkoxy mit $C_1$-$C_4$-Alkyl, Hydroxy substituiert sein. Bevorzugt werden jedoch Glykolurile, in denen $R^1$ und $R^2$ nicht substituiert ist und vorzugsweise für Wasserstoff, $C_1$- bis $C_4$-Alkyl oder Phenyl, besonders bevorzugt für Wasserstoff oder Methyl steht, verwendet.

Vorzugsweise ist $R^3$ unsubstituiert und steht für Wasserstoff, einen aliphatischen $C_1$-$C_6$, einen cycloaliphatischen $C_5$-$C_6$, einen araliphatischen $C_7$-$C_{10}$ und einen gegebenenfalls mit $C_1$-$C_4$-Alkylen substituierten Phenylrest. Besonders bevorzugt steht $R^3$ für Wasserstoff.

Die Herstellung der erfindungsgemäß zu verwendenden Glykolurile der allgemeinen Formel I ist literaturbekannt und kann aus den entsprechenden Dicarbonylverbindungen, z.B. Glyoxal und den entsprechenden, gegebenenfalls substituierten Harnstoffen, gegebenenfalls in Gegenwart eines sauren

Katalysators wie z.B. Salzsäure, erfolgen.

Insbesondere werden Glykolurilsalze aus Glykoluril oder Dimethylglykoluril und Melamin und/oder 2-Methyl- und/oder 2-Phenyl-4,6-diamino-1,3,5-triazin bevorzugt. Als besonders bevorzugtes Salz der allgemeinen Formel II werden die aus 1 Mol Glykoluril und 2 Mol bzw. 4 Mol Melamin hergestellten Glykolurilsalze, d.h. $R^4$ steht für $NH_2$, verwendet.

Die Herstellung dieser Glykolurilsalze aus Glykolurilen und den entsprechenden Triazinderivaten wird gegebenenfalls unter erhöhtem Druck bei Temperaturen von 20 bis 130° C, vorzugsweise in geeigneten Lösungsmitteln, vorzugsweise Wasser, durchgeführt.

Als thermoplastische Polyamidharze können Polyamide verwendet werden, die durch Polymerisation eines Lactams mit wenigstens 5 Ringgliedern oder einer entsprechenden ε-Aminocarbonsäure wie z.B. ε-Caprolactam, Aminocapronsäure, Enatholactam, 7-Aminohexansäure, 9-Aminononansäure, 11-Aminoundecansäure, α-Pyrrolidon und Piperidon erhalten werden; außerdem Polyamidharze, die durch Polykondensation von aliphatischen Diaminen wie Hxamethylendiamin, 2,2,4-, 2,4,4-Trimethylhexamethylendiamin, Isophorondiamin, 1,3-, 1,4-bisaminocyclohexan, Bis-amino-cyclohexyl-alkane, Xylylendiamin und aliphatischen oder aromatischen Dicarbonsäuren wie Adipinsäure, Sebacinsäure, Azelainsäure, Dodecandicarbonsäure, Glutarsäure, Cyclohexandicarbonsäure, Isophthalsäure, Terephthalsäure erhalten werden.

Außerdem kommen Polyamide in Betracht, die aus den genannten aliphatischen Dicarbonsäuren und aromatischen Diaminen wie z.B. 1,3- und 1,4-Diaminobenzol hergestellt werden, sowie Polyamid-Gemische und Copolyamide aus allen genannten Komponenten, soweit aliphatische oder teilaliphatische Polyamide entstehen. Besonders bevorzugt sind Polyamid-6 und Polyamid-6,6.

Das Polyamidharz kann noch weitere Harze enthalten, z.B. Polyester, Polyolefine, Polytetrafluorethylen, ABS, AS oder Ethylen-Vinylacetat-Copolymere in Mengen bis zu 50 Gew.-% bezogen auf Polyamide.

Glykolurile bzw. Glykolurilsalze werden zu dem Polyamidharz in einer Menge von 0,1 bis 20 Gew.-% gegeben. Dabei reicht bei der Verwendung von Glykolurilen bereits eine Menge von 0,1 bis 5 Gew.-%, vorzugsweise 0,5 bis 3 Gew.-%, für einen ausreichenden Flammschutz aus. Die Glykolurilsalze dagegen werden vorzugsweise in einer Menge von 0,1 bis 20 Gew.-%, besonders bevorzugt 3 bis 15 Gew.-% zu dem Polyamidharz gegeben. Selbstverständlich können auch Mischungen aus Glykolurilen und Glykolurilsalzen verwendet werden. Auch ist es natürlich möglich, den erfindungsgemäßen Formmassen noch weitere Flammschutzmittel, z.B. Halogenverbindungen oder roten Phosphor, zuzusetzen.

Als Verstärkungs- und Füllstoffe können in den erfindungsgemäßen Polyamidformmassen bis zu 60 Gew.-% enthalten sein, Dazu sind folgende zu nennen:

Glasfasern, Kohlefasern, Asbestfasern, Glaskugeln, Talkum, Glimmer, Wollastonit, Microvit, Kreide, Siliziumdioxid, Graphit, Gips und andere übliche Zusatzstoffe wie Pigmente und Farbstoffe, so z.B. Cadmiumsulfid, Phthalocyanine, Titandioxid.

Als weitere Flammschutzmittel können den erfindungsgemäßen Polyamidformmassen Kupferverbindungen oder ein Gemisch aus einer Kupferverbindung und einem Alkalimetallhalogenid in Mengen von 0,001 bis 1 Gew.-% zugesetzt werden.

Geeignete Kupferverbindungen umfassen anorganische und organische Kupfersalze.

Beispielhaft seien erwähnt: Kupfer-I-chlorid, Kupfer-II-sulfat, Kupfer-I-jodid, Kupfer-II-phosphat, Kupfer-II-acetat, Kupfer-II-stearat, Kupfer-II-benzoat und Kupfer-Chelat-Verbindungen.

Geeignete Alkalimetallhalogenide umfassen Kaliumjodid, Kaliumbromid, Natriumchlorid, Natriumbromid.

Als Hilfs- und Zusatzstoffe können zu dem erfindungsgemäßen Polyamidharzmassen aromatische und/oder höhere aliphatische Carbonsäuren sowie deren Alkalimetalloder Erdalkalimetallsalze, wie z.B. Natriumstearat, Calciumstearat, Isophthalsäure, Terephthalsäure in Mengen von 0,1 bis 1 Gew.-% eingearbeitet werden.

Ferner ist es möglich, beliebige, bekannte Antistatikmittel wie leitfähigen Ruß oder quaternäre Ammoniumsalze zuzusetzen.

Die Zusatzstoffe können dem Polyamidharz gemäß verschiedensten bekannten Verfahren zugemischt werden, und zwar vorzugsweise vor der Formgebung. Das einfachste Verfahren besteht darin, die Zusatzstoffe dem Polyamidharz trocken zuzumischen. Die trocken vermischte Masse kann sodann zur Herstellung von Granulaten aus der Schmelze extrudiert werden, wobei das Zumischen der Zusatzstoffe auch über bekannte Dosiervorrichtungen zu der plastifizierten Polyamid-Harzmasse im Extruder erfolgen kann. Es ist ferner möglich, zunächst Konzentratgranulate herzustellen, indem man große Mengen der Zusatzstoffe dem Polyamidharz zumischt, um dann diese Granulate mit dem Polyharz zu vermischen.

Die Formkörper können durch Formen der Masse oder der Granulate mit Hilfe verschiedener Formmaschinen, insbesondere Spritzgußmaschinen, Extrudiermaschinen, Preßmaschinen oder dergleichen hergestellt werden. Die Einarbeitung der Zusatzstoffe kann auch mit Hilfe der Formmaschinen geschehen.

Die zur Einarbeitung der Zusatzstoffe erforderlichen Temperaturen werden im wesentlichen durch die Schmelztemperatur des einzusetzenden Polyamids bestimmt. Üblicherweise sollte die Verarbeitungstemperatur mindestens 10° C, jedoch nicht mehr als 30° C über der Erweichungstemperatur des Polyamids liegen. Sie liegt z.B. für Polyamid 6,6 unterhalb 270° C, während für Polyamid 6 Temperaturen von unterhalb 250° C ausreichend sind.

Die erfindungsgemäßen Polyamidharzmassen zeigen nicht nur eine ausgezeichnete Flammfestigkeit bei ausgezeichneten mechanischen Eigenschaften und ausgezeichneter Formbarkeit, sondern sind auch hell.

In den nachfolgenden Beispielen sind, wenn nicht anders erwähnt, die Prozente Gewichtsprozente und Teile Gewichtsteile.

**Beispiele**

**Herstellung des Melaminglykolurils:**

A) Einer Mischung aus 12,6 kg Melamin und 75 Litern Wasser werden bei 95° C 7,1 kg Glykoluril zugesetzt. Zur Vervollständigung der Reaktion wird 3 Stunden bei 95° C gerührt und heiß abgesaugt, mit Wasser gewaschen und bei 100° C in einem Umlufttrockenschrank bis zur Gewichtskonstanz getrocknet (Ausbeute 15,75 kg = 80 % d.Th.). IR-Spektrum und Elementaranalyse bestätigen die angenommene Struktur

$C_{10}H_{18}H_{16}O_2$ ber: C = 30,45 %; H = 4,60 %, N = 56,83 %

(394 4) gef: C = 30,4 %, H = 4,7 %, N = 56,9 %

B) 3,55 kg Glykoluril werden bei 95° C unter Rühren zu einer Mischung aus 12,6 kg Melamin und 75 kg Wasser gegeben. Zur Vervollständigung der Reaktion wird 3 Stunden bei leichtem Rückfluß gerührt. Bei 80° C wird der erhaltene Niederschlag abgesaugt, mit heißem Wasser gewaschen und bei 100° C in einem Umlufttrockenschrank bis zur Gewichtskonstanz getrocknet. Es werden 13,1 kg eines Salzes aus 1 Mol Glykoluril und 4 Mol Melamin erhalten, dessen Struktur mittels IR-Spektrum und der Elementaranalyse bewiesen wird.

$C_{16}H_{30}N_{28}O_2$ ber: C = 29,72 %, H = 4,68 %; N = 60,66 %

(646,6) gef: C = 29,5 %; H = 4,7 % N = 60,4 %

**Beispiele 1 - 10**

Die Einarbeitung der erfindungsgemäßen Flammschutzmittel in der Polyamide erfolgte, gegebenenfalls mit Glasfasern, auf einem gegenläufigen Doppelwellenextruder Pt 55 der Firma Reifenhäuser unter den für Polyamide üblichen Bedingungen. Der abgezogene Strang wird gekühlt, granuliert und getrocknet. Anschließend wird das Granulat auf einer Spritzgießmaschine A 270 der Firma Arburg zu Prüfkörper nach ASTM 1/4, 1/8 und 1/16 Zoll sowie bei einigen Proben nach 1/32 Zoll gespritzt.

Diese Probekörper werden 48 Stunden bei 23° C und 50 % rel. Luftfeuchte gelagert und anschließend der Prüfung gemäß Underwriter's Laboratories (UL) Subjeckt 94 "Vertical Burning Test for Classifying Materials" unterzogen.

Ferner werden diese Probekörper im Trockenschrank 7 Tage bei 70° C gelagert, dann 4 Stunden über Kieselgel abgekühlt und ebenfalls nach UL Subject 94 geprüft.

In Tabelle 1 sind die Zusammensetzungen der Prüfkörper und ihre Klassifizierung nach UL Subject 94 aufgeführt, um den verbesserten Brandschutzeffekt zu verdeutlichen.

Bei allen Prüfkörpern konnten während oder nach dem Spritzvorgang, auch über einen längeren Zeitraum, keinerlei Ausplattungserscheinungen festgestellt werden. Nach einer Lagerung von 7 Tagen bei 70° C im Trockenschrank behielten alle Prüfkörper ihren Oberflächenglanz.

**Tabelle**

| Beispiel | Polyamid | Gew.-% Pa in der Mischung | Gew.-% Flammschutzmittel | Sonstige Zusätze | UL Subj. 94 48 h | | | | 7 Tage | | | |
|---|---|---|---|---|---|---|---|---|---|---|---|---|
| | | | | | 1/4 | 1/8 | 1/16 | 1/32 | 1/4 | 1/8 | 1/16 | 1/32 |
| 1 | PA 6 *ηrel = 2,9 | 100 | — | — | V 2 | V 2 | V 2 | | V 2 | V 2 | V 2 | V 2 |
| 2 | PA 6 | 90 | 10 % A | — | V 0 | V 0 | V 0 | | V 0 | V 0 | V 0 | |
| 3 | PA 6 | 92,5 | 7,5 % A | — | V 0 | V 0 | V 0 | | V 0 | V 0 | V 0 | |
| 4 | PA 6 | 99 | 1 % A | — | V 0 | V 2 | V 2 | V 2 | V 0 | V 2 | V 2 | V 2 |
| 5 | PA 6 | 90 | 10 % B | — | V 0 | V 0 | V 0 | V 0 | V 0 | V 0 | V 0 | V 0 |
| 6 | PA 6,6 *ηrel = 3,0 | 100 | — | — | V 2 | V 2 | V 2 | | V 2 | V 2 | V 2 | |
| 7 | PA 6,6 | 95 | 5 % A | — | V 0 | V 0 | V 0 | | V 0 | V 0 | V 0 | |
| 8 | PA 6 | 70 | — | 30 % Glasfaser | b | b | b | | b | b | b | |
| 9 | PA 6 | 60 | 10 % A | 30 % Glasfaser | V 2 | V 2 | V 2 | | V 2 | V 2 | V 2 | |
| 10 | PA 6 | 60 | 10 % A | 30 % Glasfaser | V 2 | V 2 | V 2 | V 2 | V 2 | V 2 | V 2 | V 2 |

* relative Viskosität gemessen an einer Lösung aus 1 g Polyamid in 100 ml m-Kresol bei 25° C.

b = brennt bis zur Halteklammer ab.

**Patentansprüche**

1. Selbstverlöschende, thermoplastische Polyamidformmassen, die gegebenenfalls bis zu 60 Gew.-%, bezogen auf die Gesamtmasse, Verstärkungs- und/oder Füllstoffe, gegebenenfalls weitere übliche Hilfs- oder Zusatzstoffe, gegebenenfalls bis zu 50 Gew.-% weitere thermoplastische Harze und gegebenenfalls weitere Flammschutzmittel aufweisen, dadurch gekennzeichnet, daß sie 0,1 - 20 Gew.-%, bezogen auf die Gesamtmasse, Glykolurile und/oder Glykolurilsalze der allgemeinen Formel II

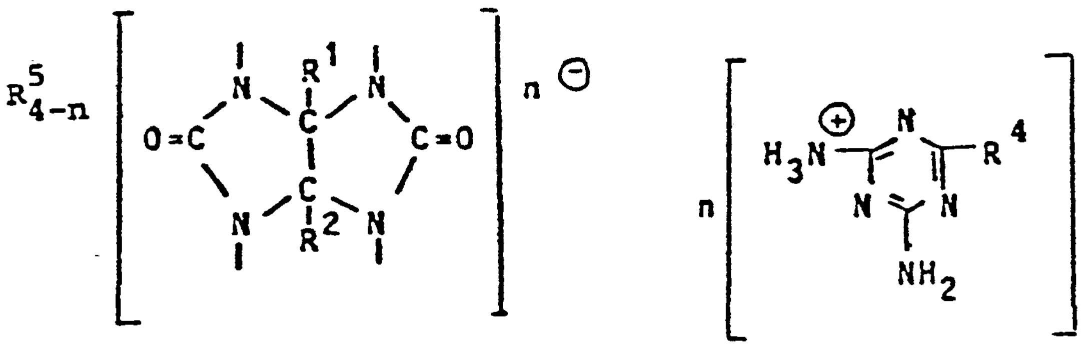

(II)

worin

$R^1$ und $R^2$ gleich oder verschieden, unabhängig voneinander für Wasserstoff, einen aliphatischen oder einen aromatischen Rest,

$R^4$ für Wasserstoff oder eine Aminogruppe, einen gegebenenfalls mit Halogen substituierten aliphatischen, cycloaliphatischen araliphatischen oder aromatischen Rest,

$R^5$ für Wasserstoff, einen aliphatischen, cycloaliphatischen, araliphatischen oder aromatischen Rest,

n für 1 bis 4 stehen,

als Flammschutzmittel enthalten.

2. Selbstverlöschende, thermoplastische Polyamidformmassen nach Anspruch 1, dadurch gekennzeichnet, daß als Flammschutzmittel Glykolurile der allgemeinen Formel I

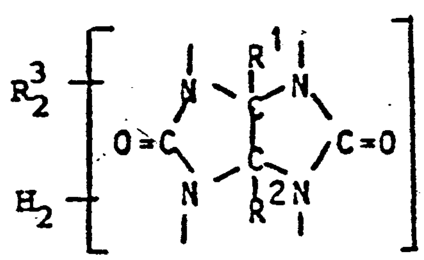

(I)

worin

$R^1$ und $R^2$ die im Anspruch 1 die angegebene Bedeutung haben,

$R^3$ für Wasserstoff, einen aliphatischen, cycloaliphatischen, araliphatischen oder aromatischen Rest stehen, verwendet werden.

3. Formmassen nach Anspruch 2, dadurch gekennzeichnet, daß in der allgemeinen Formel I

$R^1$ und $R^2$ für Wasserstoff, einen aliphatischen $C_1$ bis $C_{20}$ oder einen aromatischen $C_6$-$C_{10}$-Rest und

$R^3$ für Wasserstoff, einen aliphatischen $C_1$-$C_{20}$, einen cycloaliphatischen $C_4$-$C_{15}$, einen araliphatischen $C_7$-$C_{15}$ oder einen aromatischen $C_6$-$C_{15}$-Rest stehen.

4. Formmassen nach den Ansprüchen 2 oder 3, dadurch gekennzeichnet, daß in der allgemeinen Formel I

$R^1$ und $R^2$ für Wasserstoff, einen $C_1$-$C_4$-Alkyl- oder Phenylradikal stehen und

$R^3$ für Wasserstoff, einen aliphatischen $C_1$-$C_6$, einen cycloaliphatischen $C_5$-$C_6$, einen araliphatischen $C_7$-$C_{10}$ oder einen gegebenenfalls mit $C_1$-$C_4$-Alkylen substituierten Phenylrest steht,

5. Formmassen nach den Ansprüchen 2 bis 4, dadurch gekennzeichnet, daß in der allgemeinen Formel I $R^1$ und $R^2$ für Wasserstoff oder Methyl und $R^3$ für Wasserstoff steht.

6. Formmassen nach Anspruch 1, dadurch gekennzeichnet, daß in der allgemeinen Formel II
$R^1$ und $R^2$ die in Anspruch 3 angegebene Bedeutung haben,
$R^4$ für Wasserstoff, eine Aminogruppe, einen gegebenenfalls mit Chlor oder Brom substituiertem aliphatischen $C_1$-$C_{20}$, cycloaliphatischen $C_4$-$C_{17}$, araliphatischen $C_7$-$C_{17}$ oder aromatischen $C_6$-$C_{15}$-Rest
$R^5$ für Wasserstoff, einen aliphatischen $C_1$-$C_{20}$, cycloaliphatischen $C_4$-$C_{15}$, araliphatischen $C_7$-$C_{15}$ oder aromatischen $C_6$-$C_{15}$-Rest und
n für 2 bis 4 stehen.

7. Formmassen nach Anspruch 1 oder 6, dadurch gekennzeichnet, daß in der allgemeinen Formel II
$R^1$ und $R^2$ die im Anspruch 4 angegebene Bedeutung haben und
$R^4$ für Wasserstoff, eine Aminogruppe, einen gegebenenfalls mit Chlor oder Brom substituierten aliphatischen $C_1$-$C_6$, cycloaliphatischen $C_5$-$C_6$ araliphatischen $C_7$-$C_{10}$ oder aromatischen $C_6$-$C_{10}$ Rest,
$R^5$ für Wasserstoff, einen aliphatischen $C_1$-$C_6$, cycloaliphatischen $C_5$-$C_6$, araliphatischen $C_7$-$C_{10}$ oder aromatischen $C_6$-$C_{10}$ Rest stehen.

8. Formmassen nach Ansprüchen 6 und 7, dadurch gekennzeichnet, daß in der allgemeinen Formel II
$R^1$ und $R^2$ die im Anspruch 5 angegebene Bedeutung haben,
$R^4$ für eine Aminogruppe und
$R^5$ für Wasserstoff stehen.

9. Formmassen nach Ansprüchen 1 und 6 bis 8, dadurch gekennzeichnet, daß als Flammschutzmittel Glykolurilsalze aus Glykoluril oder Dimethylgylkoluril und Melamin und/oder 2-Methyl- und/oder 2-Phenyl-4,6-diamino-1,3,5-triazin verwendet werden.

## Claims

1. Self-extinguishing thermoplastic polyamide moulding compositions which optionally contain up to 60% by weight, based on the total composition, of reinforcing materials and/or fillers, optionally other customary auxiliaries or additives, optionally up to 50% by weight of other thermoplastic resins and optionally other flame-proofing agents, characterised in that they contain, as flame-proofing agents, 0.1 - 20% by weight, based on the total composition, of glycolurils and/or glycoluril salts of the general formula II

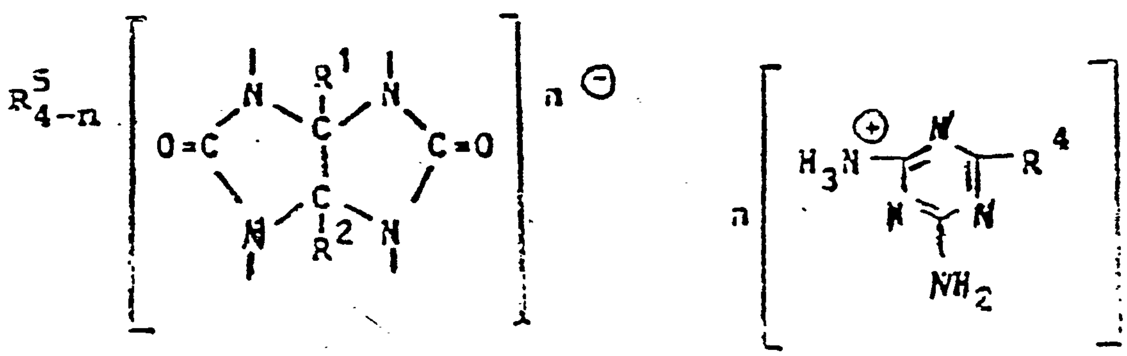

(II)

wherein
$R^1$ and $R^2$ are identical or different and independently of one another represent hydrogen or an aliphatic or aromatic radical,
$R^4$ represents hydrogen or an amino group, or an optionally halogen-substituted aliphatic, cycloaliphatic, araliphatic or aromatic radical,
$R^5$ represents hydrogen or an aliphatic, cycloaliphatic, araliphatic or aromatic radical, and. n represents 1 to 4.

2. Self-extinguishing, thermoplastic polyamide moulding compositions according to Claim 1, characterised in that glycolurils of the general formula I

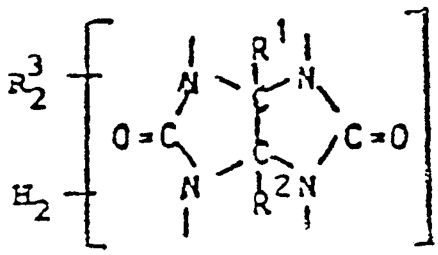

(I)

wherein

$R^1$ and $R^2$ have the meaning given in Claim 1, and

$R^3$ represents hydrogen or an aliphatic, cycloaliphatic, araliphatic or aromatic radical,

are used as flame-proofing agents.

3. Moulding compositions according to Claim 2, characterised in that, in the general formula I

$R^1$ and $R^2$ represent hydrogen, or an aliphatic $C_1$ to $C_{20}$ or an aromatic $C_6$-$C_{10}$ radical and

$R^3$ represents hydrogen or an aliphatic $C_1$-$C_{20}$, a cycloaliphatic $C_4$-$C_{15}$, an araliphatic $C_7$-$C_{15}$ or an aromatic $C_6$-$C_{15}$ radical.

4. Moulding compositions according to Claims 2 or 3, characterised in that, in the general formula I

$R^1$ and $R^2$ represent hydrogen or a $C_1$-$C_4$-alkyl or phenyl radical and

$R^3$ represents hydrogen, or an aliphatic $C_1$-$C_6$, a cycloaliphatic $C_5$-$C_6$, an araliphatic $C_7$-$C_{10}$ or an optionally $C_1$-$C_4$ -alkylenesubstituted phenyl radical.

5. Moulding compositions according to Claims 2 to 4, characterised in that, in the general formula

$R^1$ and $R^2$ represent hydrogen or methyl and

$R^3$ represents hydrogen.

6. Moulding compositions according to Claim 1, characterised in that, in the general formula II

$R^1$ and $R^2$ have the meaning given in Claim 3,

$R^4$ represents hydrogen, an amino group, an optionally chlorine- or bromine-substituted aliphatic $C_1$-$C_{20}$, cycloaliphatic $C_4$-$C_{17}$, araliphatic $C_7$-$C_{17}$ or aromatic $C_6$-$C_{15}$ radical,

$R^5$ represents hydrogen, an aliphatic $C_1$-$C_{20}$, cycloaliphatic $C_4$-$C_{15}$, araliphatic $C_7$-$C_{15}$ or aromatic $C_6$-$C_{15}$ radicaland n represents 2 to 4.

7. Moulding compositions according to Claim 1 or 6, characterised in that, in the general formula II

$R^1$ and $R^2$ have the meaning given in Claim 4 and

$R^4$ represents hydrogen, an amino group, an optionally chlorine- or bromine-substituted aliphatic $C_1$-$C_6$, cycloaliphatic $C_5$-$C_6$ araliphatic $C_7$-$C_{10}$ or aromatic $C_6$-$C_{10}$ radical, $R^5$ represents hydrogen, an aliphatic $C_1$-$C_6$, cycloaliphatic $C_5$-$C_6$, araliphatic $C_7$-$C_{10}$ or aromatic $C_6$-$C_{10}$ radical.

8. Moulding compositions according to Claims 6 and 7, characterised in that, in the general formula II

$R^1$ and $R^2$ have the meaning given in Claim 5,

$R^4$ represents an amino group and

$R^5$ represents hydrogen.

9. Moulding compositions according to Claims 1 and 6 to 8, characterised in that glycoluril salts of glycoluril or dimethyl glycoluril and melamine and/or 2-methyl- and/or 2-phenyl-4,6-diamino-1,3,5-triazine are used as flame-proofing agents.

## Revendications

1. Mélanges à mouler en polyamides thermoplastiques, auto-extinguibles, qui présentent éventuellement jusqu'à 60% en poids, par rapport au mélange total, de substances de renforcement et/ou de charges, éventuellement d'autres adjuvants ou additifs classiques, le cas échéant jusqu'à 50% en poids d'autres résines thermoplastiques et éventuellement d'autres agents retardateurs de flamme, caractérisés en ce qu'ils contiennent 0,1 à 20% en poids, par rapport au mélange total, de glycolurils et/ou de sels de glycolurile de formule générale II

II

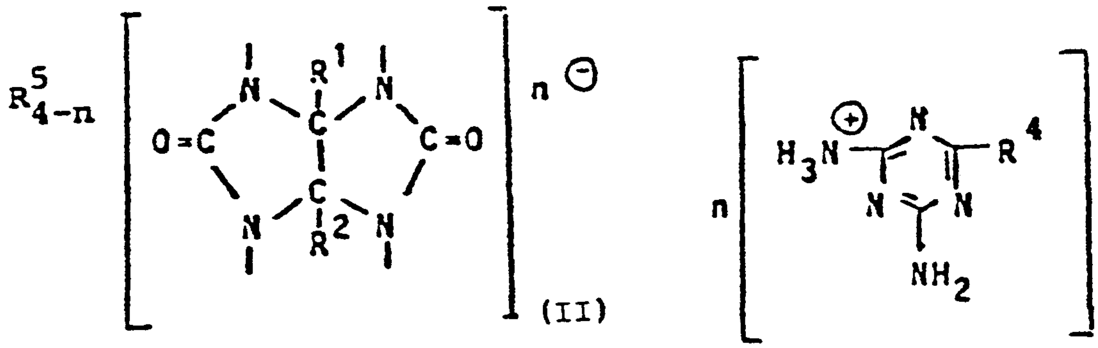

(II)

dans laquelle

$R^1$ et $R^2$ identiques ou différents, représentent indépendamment l'un de l'autre l'hydrogéne, un reste aliphatique ou un reste aromatique,

$R^4$ représente l'hydrogéne ou un groupe amino, un reste aliphatique, cycloaliphatique, araliphatique ou aromatique éventuellement substitué par un halogéne,

$R^5$ représente l'hydrogéne, un reste aliphatique, cycloaliphatique, araliphatique ou aromatique,

n a une valeur de 1 à 4,

comme agents retardateurs de flamme.

2. Mélanges à mouler en polyamides thermoplastiques auto-extinguibles suivant la revendication 1, caractérisés en ce qu'on utilise comme agents retardateurs de flamme des glycolurilés de formule générale I

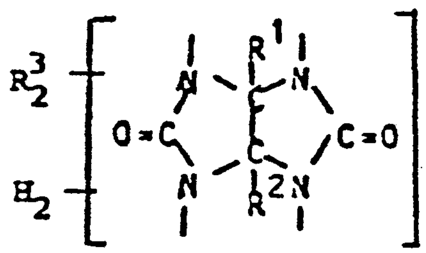

(I)

dans laquelle

$R^1$ et $R^2$ ont la définition indiquée dans la revendication 1,

$R^3$ désigne l'hydrogéne, un reste aliphatique, cycloaliphatique, araliphatique ou aromatique.

3. Mélanges à mouler suivant la revendication 2, caractérisés en ce que, dans la formule générale I,

$R^1$ et $R^2$ désignent l'hydrogéne, un reste aliphatique en $C_1$ a $C_{20}$ ou un reste aromatique en $C_6$ à $C_{10}$ et

$R^3$ désigne l'hydrogéne, un reste aliphatique en $C_1$ à $C_{20}$, cycloaliphatique en $C_4$ à $C_{15}$, araliphatique en $C_7$ à $C_{15}$ ou aromatique en $C_6$ à $C_{15}$.

4. Mélanges à mouler suivant les revendications 2 ou 3, caractérisés en ce que dans la formule générale I,

$R^1$ et $R^2$ représentent l'hydrogène, un radical alkyle en $C_1$ à $C_4$ ou phényle et

$R^3$ désigne 1 hydrogène, un reste aliphatique en $C_1$ à $C_6$, cycloaliphatique en $C_5$ ou $C_6$, araliphatique en $C_7$ à $C_{10}$ ou phényle éventuellement substitué par un groupe alkylène en $C_1$ à $C_4$.

5. Mélanges à mouler suivant les revendications 2 à 4, caractérisés en ce que dans la formule générale I, $R^1$ et $R^2$ désignent l'hydrogène ou un groupe méthyle et $R^3$ est l'hydrogène.

6. Mélanges à mouler suivant la revendication 1, caractérisés en ce que dans la formule générale II,

$R^1$ et $R^2$ ont la définition indiquée dans la revendication 3,

$R^4$ désigne l'hydrogéne, un groupe amino, un reste aliphatique en $C_1$ à $C_{20}$, cycloaliphatique en $C_4$ à $C_{17}$, araliphatique.en $C_7$ à $C_{17}$ ou aromatique en $C_6$ à $C_{15}$ éventuellement substitué par du chlore ou du brome,

$R^5$ désigne l'hydrogéne, un reste aliphatiqu en $C_1$ à $C_{20}$, cycloaliphatique en $C_4$ à $C_{15}$,ara-liphatique en $C_7$ à $C_{15}$ ou aromatique en $C_6$ à $C_{15}$ et

n a une valeur de 2 à 4.

7. Mélanges à mouler suivant la revendication 1 ou 6, caractérisés en ce que dans la formule générale II,

$R^1$ et $R^2$ ont la définition indiquée dans la revendication 4 et

$R^4$ désigne l'hydrogéne, un groupe amino, un reste aliphatique en $C_1$ à $C_6$, cycloaliphatique en $C_5$ ou $C_6$, araliphatique en $C_7$ à $C_{10}$ ou aromatique en $C_6$ à $C_{10}$ éventuellement substitué par du chlore ou du brome,

$R^5$ désigne l'hydrogéne, un reste aliphatique en $C_1$ à $C_6$, cycloaliphatique en $C_5$ ou $C_6$, araliphatique en $C_7$ à $C_{10}$ ou aromatique en $C_6$ à ClO.

8. Mélanges à mouler suivant les revendications 6 et 7, caractérisés en ce que dans la formule générale II,

$R^1$ et $R^2$ ont la définition indiquée dans la revendication 5,

$R^4$ est un groupe amino et

$R^5$ est un atome d'hydrogène.

9. Mélanges à mouler suivant les revendications 1 et 6 à 8, caractérisés en ce qu'on utilise comme retardateurs de flamme des sels de glycolurile dérivés de glycolurile ou de diméthylglycolurile et de mélamine et/ou de 2-méthyl- et/ou de 2-phényl-4,6-diamino-1,3,5-triazine.